# EUROPEAN PATENT APPLICATION

(11) **EP 4 461 618 A1**
(43) Date of publication of application: **13.11.2024**
(21) Application number: 23801291.8
(22) Date of filing: 17.10.2023
(51) Int. Cl.: B61L 23/00

(54) **DISPLAY METHOD AND APPARATUS FOR CONTROL CONSOLE TRAIN SIGNAL DURING TRANSITION**

(30) Priority: 24.03.2023 CN 202310294142
(71) Applicant: CRSC RESEARCH & DESIGN INSTITUTE GROUP CO., LTD., Fengtai District Beijing 100070 (CN)
(72) Inventor: MA, Chunyan, Beijing 100070 (CN); LIU, Hui, Beijing 100070 (CN); JIAO, Wanli, Beijing 100070 (CN); NIE, Zhiguo, Beijing 100070 (CN); CUI, Jianuo, Beijing 100070 (CN)
(74) Representative: Haseltine Lake Kempner LLP
(86) International application number: PCT/CN2023/124995
(87) International publication number: WO 2024/198309

(57) **Abstract**

The present invention discloses a display method and apparatus of a console train signaler during a transition period. The method includes: transmitting a light-prohibit command for an outdoor signaler to an all-electronic module, for instructing the all-electronic module to switch a display state of the outdoor signaler from light-off-open to light-prohibit according to the light-prohibit command, and returning a switching success information to the master station interlocking host when switching is successful; transmitting a red-light-off command for the console train signaler to a console upon not receiving switching success information returned by the all-electronic module, the red-light-off command is used to instruct the console to switch the display state of the console train signaler from light-off-open to red-light-off according to the red-light-off command. Embodiments of the present invention can achieve accurate display of a route status by the console signaler during the transition period, and avoid occurrence of abnormal situations caused by misjudgment of signal opening.

## Description

### TECHNICAL FIELD

The present invention relates to the technical field of railroad traffic management, and in particular, to a display method and apparatus of a console train signaler during transition period.

### BACKGROUND

The inbound and outbound ports of a new type train control system are generally automatically blocked to ensure the safety of entrance and exit, and outdoor outbound or inbound signalers will only be shown with the light-off-openstate when the signal is open, and may need to be displayed with the light-prohibit state other times. A console train signaler is deployed on an indoor console to perform synchronous mapping display of the display mode of the outdoor signaler, so that the traffic and dispatch personnel can know the actual state of the route of the current outdoor signaler through the console train signaler through the indoor console, in order to facilitate timely decision making.

In the actual job scheduling, the traffic and dispatch personnel sometimes need to issue a switching command to the display mode of the outdoor signaler. When the section is switched to the automatic block mode, the interlocking host checks whether the signal open condition is satisfied every cycle, and issues a command to switch the display state of the outdoor signaler from the light-off-open to the light-off when the signal open condition is not satisfied. Prior to the command, the display states of the outdoor signaler and the console train signaler are generally identical, and the traffic and dispatch personnel should theoretically switch the corresponding display state immediately after the command to switch the display state of the outdoor signaler, so that the console train signaler is identical to the display state of the outdoor signaler.

However, the device in the train control system is large, and a command for the display state switching of the outdoor signaler from the issuance to the reception and execution of the outdoor signaler often requires a plurality of device to participate in the processing and forwarding of the command, resulting in a long processing time from the issuance of the command to the completion of the execution. Because of the processing time, what state the console train signaler displays during the transition period from issuing a command to the outdoor signaler to the actual execution of the outdoor signaler becomes a problem to be solved.

### SUMMARY

The present invention provides a display method and apparatus of a console train signaler during a transition period, to realize accurate display of the route status by the console signaler during the transition period, avoiding occurrence of abnormal situations caused by misjudgment of signal opening.

According to an aspect of the present invention, there is provided a display method of a console train signaler during a transition period, comprising:
Transmitting a light-prohibit command for an outdoor signaler to an all-electronic module, for instructing the all-electronic module to switch a display state of the outdoor signaler from light-off-open to light-prohibit according to the light-prohibit command, and returning a switching success information to the master station interlocking host when switching is successful;
Transmitting a red-light-off command for the console train signaler to a console upon not receiving switching success information returned by the all-electronic module, the red-light-off command is used to instruct the console to switch the display state of the console train signaler from light-off-open to red-light-off according to the red-light-off command.

According to another aspect of the invention, there is provided a display apparatus of a console train signaler during a transition period, comprising:
A first prohibit transmission module, for transmitting a light-prohibit command for an outdoor signaler to an all-electronic module, for instructing the all-electronic module to switch a display state of the outdoor signaler from light-off-open to light-prohibit according to the light-prohibit command, and returning a switching success information to the master station interlocking host when switching is successful;
A red-light-off start module, for transmitting a red-light-off command to a console train signaler to a console upon not receiving switching success information returned by the all-electronic module, the red-light-off command is used to instruct the console to switch the display state of the console train signaler from light-off-open to red-light-off according to the red-light-off command.

According to another aspect of the invention, there is provided an electronic device comprising:
At least one processor; and
A memory communicatively connected with the at least one processor; wherein,

The stores computer program executable by the at least one processor, the computer program being executed by the at least one processor to enable the at least one processor to perform the display method of a console train signaler during a transition period of any one of the embodiments of the invention.

According to another aspect of the present invention, there is provided a computer-readable storage medium, the computer-readable storage medium storing computer instructions for causing a processor to implement, when executed, a display method of a console train signaler during a transition period according to any one of the embodiments of the present invention.

Embodiments of the present invention conform to the normal shut-down process of the signaler by controlling the console signaler to display in a red-light-off state during the transition period. From the technical condition point of view, when the open condition of the light-off signal is satisfied, the signaler displays light-off L/U/UUS/UU/LU according to the technical specification, and when the open condition is not satisfied, the signal should be turned off immediately, the prohibit light of the signaler should be lit, and since the current state returned by all-electronic module is still the light-off state, in combination with the current actual light-off state, and the condition of turning off the signal, it is reasonable to display the red-light-off in the transition period, to achieve accurate display of the current route status and the display state of the outdoor signaler, and to avoid the occurrence of abnormal situations caused by misjudgment of signal opening.

It should be understood that what is described in this section is not intended to identify key or critical features of embodiments of the invention nor is it intended to limit the scope of the invention. Other features of the present invention will become apparent from the following description.

### BRIEF DESCRIPTION OF THE DRAWINGS

In order to more clearly illustrate the technical solutions in the embodiments of the present invention, the following will simply introduce the accompanying drawings to be used in the description of the embodiments, and it is obvious that the accompanying drawings in the following description are only some embodiments of the present invention, and it will be obvious to those skilled in the art that other drawings can be obtained according to these accompanying drawings without paying inventive labor.
FIG. 1 is a flow diagram of a display method of a console train signaler during a transition period according to an embodiment of the present invention;
FIG. 2 is a flow diagram of a display method of a console train signaler during a transition period in accordance with another embodiment of the present invention;
FIG. 3 is a block diagram of a display apparatus of a transition console train signaler during a transition period according to another embodiment of the present invention;
FIG. 4 is a block diagram of an electronic device implementing an embodiment of the present invention.

### DETAILED DESCRIPTION

In order for those skilled in the art to better understand the solutions of the present invention, the technical solutions of the embodiments of the present invention will be clearly and completely described below in conjunction with the accompanying drawings of the embodiments of the present invention, it is obvious that the described embodiments are only embodiments of a part of the present invention, rather than all of the embodiments. Based on the embodiments in the present invention, all other embodiments obtained by those of ordinary skilled in the art without paying inventive labor should belong to the scope of protection of the present invention.

It is noted that the terms "first", "second" and the like in the description and claims of the present invention as well as in the drawings described above, are used for distinguishing between similar objects and not necessarily for describing a particular sequential or chronological order. It is to be understood that such use of data may be interchanged under appropriate circumstances such that the embodiments of the invention described herein are capable of being practiced in sequences other than those illustrated or described herein. Furthermore, the terms "comprises" and "comprising" and any variations thereof, are intended to cover a non-exclusive inclusion, for example, a process, method, system, article, or device that comprises a list of steps or elements is not necessarily limited to those steps or elements expressly listed but may include other steps or elements not expressly listed or inherent to such process, method, article, or device.

Before explaining the specific embodiment of the present invention, a partial specification of the signaler display status in railroad traffic management will be described as follows:
According to the "Provisional Technical Conditions for Train Control Center and Interlocking Integrated System of New Type Train Control System", section of clause 7.3. 2, in particular, the train control center and interlocking integrated system TIS should satisfy the following requirements when applied to a station where the signaler is normally in a light-on state and the light-off function is required:
1) For an inbound signaler, when the corresponding inbound port is automatically blocked, if the inbound port "light hold" button (lead seal not self-replicating) is pressed, the inbound signaler should be maintained in the light-on state after the entry of the train is aligned to enter the rail; if the "light hold" button is up, the signaler may be turned to the light-off state when the inbound signal red light filament is intact and other open conditions are satisfied after the train is aligned to enter the rail; and the red light of the signaler should be turned on if the entry has been established and the signaler is in a light-off state, and the entry establishment condition is not satisfied.
2) for an outbound signaler, when the corresponding outbound port is automatically blocked, after the departure of the train is aligned to enter the rail, the signaler can be turned to a light-off state only when the outbound signal red light filament is intact and other open conditions are satisfied; and the red light of the signaler should be turned on if the entry has been established and the signaler is in a light-off state, and the entry establishment condition is not satisfied.
3) For the train in the light-off state entering the rail, the TIS operation representing machine and the train signaler on the terminal of the electric maintenance machine are displayed on the principle of three display or four display.

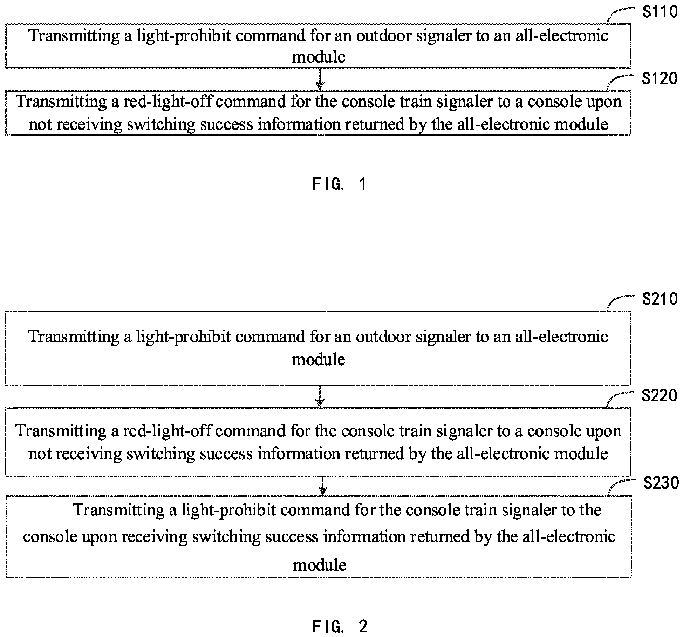

Fig. 1 is a flowchart of a display method of a console train signaler during transition period according to an embodiment of the present invention, which is applicable to a case where a light-prohibit command is issued to an outdoor signaler when the console signaler and the outdoor signaler are displayed in a light-off-open state, and the console signaler is caused to perform a state display with a set transition logic during the transition period before it is determined that the switching of the outdoor signaler is completed, which may be performed by a display apparatus of the console train signaler during transition period, which may be implemented in the form of hardware and/or software, and which may be provided in an electronic apparatus having a corresponding data processing capability, such as a master station interlocking host. As shown in FIG. 1, the method comprises:
S 110, transmitting a light-prohibit command for an outdoor signaler to an all-electronic module, for instructing the all-electronic module to switch a display state of the outdoor signaler from light-off-open to light-prohibit according to the light-prohibit command, and returning a switching success information to the master station interlocking host when switching is successful.

Wherein, the light-prohibit command is a command to control the signaler to switch from a current display state to a light-prohibit state display state, the outdoor signaler may be an inbound signaler at an outdoor inbound port or an outbound signaler at an outdoor outbound port. The interlocking host is directly communicatively connected with the all-electronic module and the console, and indirectly controls a display state of the outdoor signaler through the all-electronic module and a display state of the console signaler through the console, respectively.

Specifically, the light-prohibit control command of the outdoor signaler is given by the interlocking host and transmitted to the all-electronic module. The all-electronic module sends the light-prohibit command to the outdoor signaler, and the outdoor signaler receives and executes the command to switch the display state from the light-off-open to the light-prohibit. The all-electronic module gathers the true display state of the outdoor signaler after the light-prohibit command is issued, and determines that the display state of the outdoor signaler is switched successfully when the true display state is the light-prohibit, and feeds back the switching success information to the interlocking host, and the interlocking host sends the light-prohibit command to the console after receiving the switching success information, so that the console signaler is switched to the light-prohibit display in synchronization with the outdoor signaler. For how the interlocking host sets the display state of the console signaler during the transition period from issuing the light-prohibit command to receiving the switching success message, the present invention provides three schemes, respectively as follows:
Scheme 1: the console signaler maintains display of the light-off-open signal during a transition period from issuing the light-prohibit command to the all-electronic module by the interlocking host to issuing the light-prohibit command to the console; that is, the console is allowed to maintain the existing light-off-open display state for a certain period of time before the outdoor signaler has not successfully returned to the light-prohibit state, in accordance with the convention.
Scheme 2: the real state of the outdoor signaler is still the light-off state during a transition period from issuing the light-prohibit command to the all-electronic module by the interlocking host to issuing the light-prohibit command to the console, the all-electronic module passes the real display state of the outdoor signaler to the interlocking host, the interlocking host sends the real display state of the signaler to the console, and the console interface synchronously displays the real display state, i.e., the display state of the console interface signaler is consistent with the realization display state of the all-electronic module back to the interlocking host.
Scheme 3: the console interface signaler state is displayed as the red-light-off state during a transition period from issuing the light-prohibit command to the all-electronic module by the interlocking host to issuing the light-prohibit command to the console, i.e., the state display transition is made through the red-light-off state.

For example, when the interlocking host controls the outdoor signaler at the present station: the master station interlocking host needs to first send the light-prohibit command to its own all-electronic module, which sends the light-prohibit command to its own signaler. After the signaler is lit, the all-electronic module transmits a feedback message to the interlocking host (e.g., the signaler has been switched from the light-off-open signal to the light-off signal),and at this time, the console signaler switches display states accordingly, regardless of any delay, and regardless of the time it takes to light the signaler. The interlocking host cycle is calculated according to 250ms, and theoretically the transition time requires at least 2 cycles, with a total of 500ms.

When the interlocking host controls the outdoor signalers of other stations: the master station interlocking host issues the light-prohibit command to the controlled station interlocking host, the controlled station interlocking host issues again to the all-electronic module of itself (the controlled station), and the signaler is controlled by the all-electronic module (of the controlled station). Regardless of any delay and the time taken to light up the signaler, the transition time theoretically takes at least 4 cycles, with a total of 1s. It has been found that in practice, in normal outdoor situations, the transition time is typically more than 2s. Since the transition time is far beyond the persistence time of the human eye, the display of the console interface signaler during the transition period is also particularly critical.

S120, transmitting a red-light-off command for the console train signaler to a console upon not receiving switching success information returned by the all-electronic module, the red-light-off command is used to instruct the console to switch the display state of the console train signaler from light-off-open to red-light-off according to the red-light-off command.

Specifically, in scheme 3, the console transitions by displaying a red light as an intermediate state of light-off-open signal and light-prohibit. The control console allows the traffic and dispatch personnel to judge early that the situation of the route signal is closed by using the red-light-off as a transition state. The interlocking host sends the light-off L/U/UUS/UU/LU to the console for display in the light-off state of the signaler according to the signal-open condition specified by the "Technical Management Act for Railways" (High-Speed Railway Section). When the open condition of the signal is not satisfied, i.e., the open condition of the L light, LU light, U light, USU light, UU light fails, then the interlocking host should theoretically give the light-prohibit command to the console immediately, but since the all- electronics module returned to the interlocking host is still the light-off state of the signaler, the interlocking host can actually send the red-light-off command to the console for display during this transition period, promptly alerting the traffic personnel that the current light-off route has not satisfied the open condition. In the meantime, the red-light-off is one display state of three display or four display, and the principle of three display or four display under light-off specified by the specification is satisfied. On the contrary, the red-light-off can only be displayed when the light-off signal is turned off, and if the transition is made directly to the light-prohibit when the light-off signal is turned off, the display scene of the red light-off is missing in the principle of three display or four display under the light-off specified by the specification.

Embodiments of the present invention conform to the normal shut-down process of the signaler by controlling the console signaler to display in a red-light-off state during the transition period. From the technical condition point of view, when the open condition of the light-off signal is satisfied, the signaler displays light-off L/U/UUS/UUALU according to the technical specification, and when the open condition is not satisfied, the signal should be turned off immediately, the prohibit light of the signaler should be lit, and since the current state returned by all-electronic module is still the light-off state, in combination with the current actual light-off state, and the condition of turning off the signal, it is reasonable to display the red-light-off in the transition period, to achieve accurate display of the current route status and the display state of the outdoor signaler, and to avoid the occurrence of abnormal situations caused by misjudgment of signal opening.

Optionally, after transmitting the light-prohibit command for the outdoor signaler to the all-electronics module, further comprises:
Acquiring a preset transition time upon not receiving switching success information returned by the all-electronic module; transmitting the light-off-open command for the console train signaler to the console if a true display state of the outdoor signaler returned by the all-electronic module within a transition time is light-off-open, the light-off-open command is used to instruct the console to maintain the display state of the console train signaler light-off-open according to the light-off-open command; transmitting the light-prohibit command for the console train signaler to the console if the true display state of the outdoor signaler returned by the all-electronic module within the transition time is the light-prohibit, the light-prohibit command is used to instruct the console to switch the display state of the console train signaler from the light-off-open to the light-prohibit according to the light-prohibit command.

Specifically, in the scheme 1t, when the route signal does not satisfy the open condition and the interlocking host issues the light-prohibit command, the preset transition time is set. During the transition time, if the outdoor signaler fails to light up the light-prohibit, i.e., the state of the signaler returned by the all-electronic module to the interlocking host is still the light-off state, the interlocking host sends the light-off state to the console, and the console interface maintains the display of the existing light-off-open signal; if the outdoor signaler successfully lights up the light-prohibit during the transition time, the all-electronic module transmits the collected signaler state to the interlocking host, and the interlocking host synchronously transmits to the console, and the console signaler displays the light-prohibit state, which is consistent with normal operation, is easy to understand, and is easily accepted by station and dispatcher personnel. However, in the actual operating environment in the field, due to the complexity of the field environment, there may be a delay in transmission data of the device of the station and a delay in the signal safety data network, and the transition time cannot be unified in the case of different lines and different stations, resulting in an inaccurate statistics of the transition time, and there may be a delay in which the transition time exceeds 2s or more. In the case of an excessively long transition time, if the access is constantly kept on the open signal with the light-off, it is likely that the traffic and dispatch personnel cannot accurately judge the status of the route and the signaler in time, which will cause errors.

Optionally, transmitting a red light wire breaking command to a console train signaler to a console if the true display state of the outdoor signaler returned by the all-electronic module is always light-off-open within a transition time, the red light wire breaking command is used to instruct the console to switch the display state of the console train signaler from light-off-open to red light wire breaking according to the red light wire breaking command.

Specifically, if the display state of the outdoor signaler is always light-off-open collected by the all-electronic module during the preset transition time, it can be determined that an abnormal problem occurs in the outdoor signaler. At this time, the interlocking host sends a red light wire breaking command to the console, which causes the console signaler to switch from light-off-open to red light wire breaking display state, alerting the traffic and dispatch personnel that the outdoor signaler is abnormal.

Optionally, after transmitting the light-prohibit command for the outdoor signaler to the all-electronic module, further comprises:
Acquiring, from the all-electronic module, the true display state of the outdoor signaler collected by the all-electronic module upon not receiving the switching success information returned by the all-electronic module; transmitting the true display state to a console for instructing the console to maintain the display state of the console train signaler consistent with the true display state .

Specifically, in the scheme 2, the interlocking host sends the console to display according to the collected actual display state of the outdoor signaler returned by the all-electronic module. Since the outdoor signaler is still in the light-off state during the transition period, the all-electronic module sends the collected light-off-open state to the interlocking host, and the interlocking host synchronously sends to the console, and the console signaler displays the actual state of the outdoor signaler, as is conventional. However, in the operation display of the operation presentation machine of the "Provisional Technical Conditions for Train Control Center and Interlocking Integrated System of New Type Train Control System", Appendix I (Normative Appendix), the state display range of the console signaler lacks the display of the light-off-open state; if displaying according to the true light-off state returned by the module, this is contrary to the specification; in the meantime, the specification requires that, for the train in the light-off state entering the rail, the TIS operation representing machine and the train signaler on the terminal of the electric maintenance machine are displayed on the principle of three display or four display, the principle of three display or four display does not contain the light-off state display, and which is in conflict with this specification.

FIG. 2 is a flow chart of a display method of a console train signaler during the transition period according to a further embodiment of the present invention, which is optimized over the embodiments described above. As shown in FIG. 2, the method comprises:
S210, transmitting a light-prohibit command for an outdoor signaler to an all-electronic module, for instructing the all-electronic module to switch a display state of the outdoor signaler from light-off-open to light-prohibit according to the light-prohibit command, and returning a switching success information to the master station interlocking host when switching is successful;
S220, transmitting a red-light-off command for the console train signaler to a console upon not receiving switching success information returned by the all-electronic module, the red-light-off command is used to instruct the console to switch the display state of the console train signaler from light-off-open to red-light-off according to the red-light-off command.

S230, transmitting the light-prohibit command for the console train signaler to the console upon receiving the switching success information returned by the all-electronic module, the light-prohibit command is used to instruct the console to switch the display state of the console train signaler from red-light-off to light-prohibit according to the light-prohibit command.

Specifically, the transition period ends when the interlocking host receives the switching success message returned by the all-electronic module. In the case where it is determined that the outdoor signaler has been successfully switched, the interlocking host sends a light-prohibit command to the console. Upon receiving the light-prohibit command, the console switches the current red-light-off display state of the console signaler to the light-prohibit display state to end the red-light-off display of the console signaler during the transition period.

Optionally, the all-electronic module is a master station all-electronic module or other station all-electronic module; if the all-electronics module is the other station all-electronics module, the transmitting the light-prohibit command for the outdoor signaler to the all-electronic module comprises: transmitting the light-prohibit command for an outdoor signaler to other interlocking host for instructing the other interlocking host to transmit a light-prohibit command to the outdoor signaler through other station all-electronic module; accordingly, the handoff success information is fed back to the other station interlock master by the other station all-electronic module, and forwarded to the master station interlock master by the other station interlock master.

Specifically, the present invention is applicable not only to the scenario where the interlocking host controls the outdoor signaler at the present station, but also to the case where the interlocking host controls the outdoor signaler at other stations. In contrast to controlling the outdoor signaler of the present station, since the interlocking host of the present station cannot directly communicate with the all-electronic module of the other station, the interlocking host of the other station is required as a communication intermediary between the interlocking host of the present station and the all-electronic module of the other station for relaying the light-prohibit command and switching success information. The remainder of the process is the same as the above embodiment disclosure and will not be described here too much.

The embodiment of the present invention facilitates the traffic and dispatch personnel to know the real-time state of the outdoor signaler in time and accurately by terminating the display of the red-light-off state of the console signaler during the transition period and switching back to the display of the light-prohibit state in synchronization with the outdoor signaler at the end of the transition period.

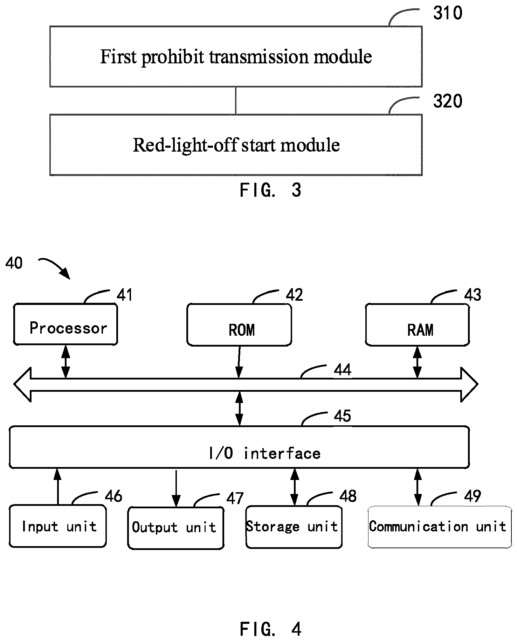

FIG. 3 is a block diagram of a display apparatus of a console train signaler during a transition period according to another embodiment of the present invention. As shown in FIG. 3, the apparatus comprises:
A first prohibit transmission module 310, for transmitting a light-prohibit command for an outdoor signaler to an all-electronic module, for instructing the all-electronic module to switch a display state of the outdoor signaler from light-off-open to light-prohibit according to the light-prohibit command, and returning a switching success information to the master station interlocking host when switching is successful;
A red-light-off start module 320, for transmitting a red-light-off command to a console train signaler to a console upon not receiving switching success information returned by the all-electronic module, the red-light-off command is used to instruct the console to switch the display state of the console train signaler from light-off-open to red-light-off according to the red-light-off command.

The display apparatus for a console train signaler during a transition period according to an embodiment of the present invention can implement the display method for a console train signaler during a transition period according to any embodiment of the present invention, with functional modules and advantageous effects corresponding to the implementation method.

Optionally, the apparatus further comprises:
A red-light-off end module, for transmitting the light-prohibit command for the console train signaler to the console upon receiving the switching success information returned by the all-electronic module, the light-prohibit command is used to instruct the console to end the display state of the console train signaler from a light-prohibit to a light-prohibit according to the light-prohibit command.

Optionally, the apparatus further comprises:
A transition time acquiring unit, for acquiring a preset transition time upon not receiving switching success information returned by the all-electronic module;
A light-off-open transmitting module, for transmitting the light-off-open command for the console train signaler to the console if a true display state of the outdoor signaler returned by the all-electronic module within a transition time is light-off-open, the light-off-open command is used to instruct the console to maintain the display state of the console train signaler light-off-open according to the light-off-open command;
A second prohibit transmission module for transmitting the light-prohibit command for the console train signaler to the console if the true display state of the outdoor signaler returned by the all-electronic module within the transition time is the light-prohibit, the light-prohibit command is used to instruct the console to switch the display state of the console train signaler from the light-off-open to the light-prohibit according to the light-prohibit command.

Optionally, the apparatus comprises:
A red light wire breaking transmitting module, for transmitting a red light wire breaking command to a console train signaler to a console if the true display state of the outdoor signaler returned by the all-electronic module is always light-off-open within a transition time, the red light wire breaking command is used to instruct the console to switch the display state of the console train signaler from light-off-open to red light wire breaking according to the red light wire breaking command.

Optionally, the apparatus further comprises:
A true state acquiring module for aquiring, from the all-electronic module, the true display state of the outdoor signaler collected by the all-electronic module upon not receiving the switching success information returned by the all-electronic module;
A true state transmitting module for transmitting the true display state to a console for instructing the console to maintain the display state of the console train signaler consistent with the true display state.

Optionally, the all-electronic module is a master station all-electronic module or other station all-electronic module; if the all-electronics module is the other station all-electronics module, the first prohibit transmission module transmitting the light-prohibit command for an outdoor signaler to other interlocking host for instructing the other interlocking host to transmit a light-prohibit command to the outdoor signaler through other station all-electronic module; accordingly, the handoff success information is fed back to the other station interlock master by the other station all-electronic module, and forwarded to the master station interlock master by the other station interlock master.

The display apparatus for a console train signaler during a transition period described further can also implement the display method for a console train signaler during a transition period provided by any of the embodiments of the present invention, with functional modules and advantageous effects corresponding to the implementation of the method.

FIG. 4 shows a schematic block diagram of an electronic device 40 that may be used to implement an embodiment of the invention. The electronic device is intended to represent various forms of digital computers, such as laptops, desktops, workstations, personal digital assistants, servers, blade servers, mainframes, and other appropriate computers. The electronic device may also represent various forms of mobile apparatus, such as personal digital processing, cell phone, smart phone, wearable device (e.g., helmet, glasses, watch, etc.), and other similar computing apparatus. The components shown here, their connections and relationships, and their functions, are by way of example only, and are not meant to limit implementations of the inventions described and/or claimed herein.

As shown in FIG. 4, the electronic device 40 includes at least one processor 41, and a memory such as a read-only memory (ROM) 42, a random access memory (RAM) 43, etc., communicatively connected with the at least one processor 41, wherein the memory stores computer program executable by the at least one processor, and the processor 41 can perform various appropriate actions and processes according to the computer program stored in the read-only memory (ROM) 42 or the computer program loaded into the random access memory (RAM) 43 from the storage unit 48. In the RAM 43, various programs and data required for the operation of the electronic device 40 can also be stored. The processor 41, the ROM 42, and the RAM 43 are connected to each other by a bus 44. An input/output (I/O) interface 45 is also connected to the bus 44.

A plurality of components in the electronic device 40 are connected to the I/O interface 45, including: an input unit 46 such as a keyboard, a mouse, or the like; an output unit 47 such as various types of displays, speakers, and the like; a storage unit 48, e.g., magnetic disk, optical disk, etc.; and a communications unit 49, such as a network card, modem, wireless communications transceiver, or the like. The communication unit 49 allows the electronic device 40 to exchange information/data with other device through a computer network such as the Internet and/or various telecommunication networks.

The processor 41 may be a variety of general purpose and/or special purpose processing components having processing and computing capabilities. Some examples of the processor 41 include, but are not limited to, a central processing unit (CPU), a graphics processing unit (GPU), various specialized artificial intelligence (AI) computing chips, various processor running machine learning model algorithms, a digital signal processor (DSP), and any appropriate processor, controller, microcontroller, or the like. The processor 41 performs the various methods and processes described above, such as a display method of a console train signaler during a transition period.

In some embodiments, the display method of a console train signaler during a transition period may be implemented as a computer program tangibly embodied on a computer-readable storage medium, such as the storage unit 48.In some embodiments, part or all of the computer program may be loaded into and/or installed onto the electronic device 40 via the ROM 42 and/or the communication unit 49. One or more steps of the display method of console train signaler during transition period described herein above may be performed when the computer program is loaded into the RAM 43 and executed by the processor 41. Alternatively, in other embodiments, the processor 41 may be configured by any other suitable means (e.g. by means of firmware) to perform the display method of the console train signaler during the transition period.

Various implementation of the systems and techniques described above can be realized in digital electronic circuitry, integrated circuitry, field programmable gate arrays (FPGA), application specific integrated circuits (ASIC), application specific standard products (ASSP), system-on-a-chip systems (SOC), load programmable logic device (CPLD), computer hardware, firmware, software, and/or combinations thereof. These various implementation can include: implementation in one or more computer programs that are executable and/or interpretable on a programmable system including at least one programmable processor, which may be special or general purpose programmable processor, that may receive data and instructions from, and to transmit data and instructions to, a storage system, at least one input apparatus, and at least one output apparatus.

Computer programs for carrying out methods of the present invention may be written in any combination of one or more programming languages. These computer programs may be provided to processor of a general purpose computer, a special purpose computer, or other programmable data processing apparatus, such that the computer programs, when executed by the processor, cause the functions/operations specified in the flowcharts and/or block diagrams to be implemented. The computer program may execute entirely on the machine, partly on the machine, partly on the machine and partly on a remote machine as a stand-alone software package or entirely on the remote machine or server.

In the context of the present disclosure, a computer readable storage medium may be a tangible medium that can contain, or store a computer program for use by or in connection with an instruction execution system, apparatus, or device. A computer readable storage medium may include, but is not limited to, an electronic, magnetic, optical, electromagnetic, infrared, or semiconductor system, apparatus, or device, or any suitable combination of the foregoing. Alternatively, the computer readable storage medium may be a machine readable signal medium. More specific examples of the machine readable storage medium would include an electrical connection based on one or more wires, a portable computer diskette, a hard disk, a random access memory (RAM), a read-only memory (ROM), an erasable programmable read-only memory (EPROM or a Flash memory), an optical fiber, a convenient compact disc read-only memory (CD-ROM), an optical storage device, a magnetic storage device, or any suitable combination of the foregoing.

To provide for interaction with a user, the systems and techniques described here can be implemented on an electronic device having a display device (e.g., a CRT (cathode ray tube) or LCD (liquid crystal display) monitor) for displaying information to the user; and a keyboard and a pointing apparatus (e.g., a mouse or trackball) by which the user can provide input to the electronic apparatus. Other kinds of apparatus can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing system that includes a back-end components (e.g., as a data server), or that includes a middleware components (e.g., an application server), or that includes a front-end components (e.g., a user computer having a graphical user interface or a web browser through which a user can interact with an implementation of the systems and techniques described here), or any combination of such back-end, middleware, or front-end components. The components of the system can be interconnected by any form or medium of digital data communication, e.g., a communication network. Examples of communication networks include a local area network (LAN), a wide area network (WAN), blockchain networks, and the Internet.

The computing system may include clients and servers. A client and server are generally remote from each other and typically interact through a communication network. The relationship of client and server arises by virtue of computer programs running on the respective computers and having a client-server relationship to each other. The server may be a cloud server, also referred to as a cloud computing server or a cloud host, and is a host product in a cloud computing service architecture to address the shortcomings of the traditional physical host and VPS services that are difficult to manage and have weak scalability of traffic.

It should be understood that various forms of the flow shown above may be used, with steps reordered, added, or deleted. For example, each step described in the present invention may be executed in parallel, may be executed sequentially, or may be executed in a different order, which is not limited herein as long as the desired result of the technical solution of the present invention can be achieved.

The above detailed description is not to be construed as limiting the scope of the present invention. It should be apparent to those skilled in the art that various modifications, combinations, sub-combinations, and substitutions may occur depending on design requirements and other factors. It is intended that all such modifications, equivalents, and improvements be included within the spirit and principles of the present invention fall within the scope of the present invention.

## Claims

1. A display method of a console train signaler during a transition period, **characterized in that**, the method is applied to a master station interlocking host, the method comprising:
transmitting a light-prohibit command for an outdoor signaler to an all-electronic module, for instructing the all-electronic module to switch a display state of the outdoor signaler from light-off-open to light-prohibit according to the light-prohibit command, and returning a switching success information to the master station interlocking host when switching is successful;
transmitting a red-light-off command for the console train signaler to a console upon not receiving switching success information returned by the all-electronic module, the red-light-off command is used to instruct the console to switch the display state of the console train signaler from light-off-open to red-light-off according to the red-light-off command.

2. The method according to claim 1, **characterized in that**, after transmitting the red-light-off command for the console train signaler to the console, the method further comprising,:
transmitting the light-prohibit command for the console train signaler to the console upon receiving the switching success information returned by the all-electronic module, the light-prohibit command is used to instruct the console to switch the display state of the console train signaler from red-light-off to light-prohibit according to the light-prohibit command.

3. The method according to claim 1, **characterized in that**, after transmitting the light-prohibit command for the outdoor signaler to the all-electronics module, the method further comprising:
acquiring a preset transition time upon not receiving switching success information returned by the all-electronic module;
transmitting the light-off-open command for the console train signaler to the console if a true display state of the outdoor signaler returned by the all-electronic module within a transition time is light-off-open, the light-off-open command is used to instruct the console to maintain the display state of the console train signaler light-off-open according to the light-off-open command;
transmitting the light-prohibit command for the console train signaler to the console if the true display state of the outdoor signaler returned by the all-electronic module within the transition time is the light-prohibit, the light-prohibit command is used to instruct the console to switch the display state of the console train signaler from the light-off-open to the light-prohibit according to the light-prohibit command.

4. The method according to claim 3, **characterized in that**, after transmitting the light-prohibit command for the outdoor signaler to the all electronics module, the method further comprising:
transmitting a red light wire breaking command to a console train signaler to a console if the true display state of the outdoor signaler returned by the all-electronic module is always light-off-open within a transition time, the red light wire breaking command is used to instruct the console to switch the display state of the console train signaler from light-off-open to red light wire breaking according to the red light wire breaking command.

5. The method according to claim 1, after transmitting the light-prohibit command for the outdoor signaler to the all-electronic module, the method further comprising,:
acquiring, from the all-electronic module, the true display state of the outdoor signaler collected by the all-electronic module upon not receiving the switching success information returned by the all-electronic module;
transmitting the true display state to a console for instructing the console to maintain the display state of the console train signaler consistent with the true display state.

6. The method according to any of claims 1-5, **characterized in that**, the all-electronic module is a master station all-electronic module or other station all-electronic module; if the all-electronics module is the other station all-electronics module, the transmitting the light-prohibit command for the outdoor signaler to the all-electronic module comprises:
transmitting the light-prohibit command for an outdoor signaler to other interlocking host for instructing the other interlocking host to transmit a light-prohibit command to the outdoor signaler through other station all-electronic module;
accordingly, the handoff success information is fed back to the other station interlock master by the other station all-electronic module, and forwarded to the master station interlock master by the other station interlock master.

7. A display apparatus of a console train signaler during a transition period, **characterized in that**, the apparatus is deployed at a master station interlocking host, the apparatus comprising:
a first prohibit transmission module, for transmitting a light-prohibit command for an outdoor signaler to an all-electronic module, for instructing the all-electronic module to switch a display state of the outdoor signaler from light-off-open to light-prohibit according to the light-prohibit command, and returning a switching success information to the master station interlocking host when switching is successful;
a red-light-off start module, for transmitting a red-light-off command to a console train signaler to a console upon not receiving switching success information returned by the all-electronic module, the red-light-off command is used to instruct the console to switch the display state of the console train signaler from light-off-open to red-light-off according to the red-light-off command.

8. The apparatus according to claim 7, **characterized in that**, the apparatus further comprising:
a red-light-off end module, for transmitting the light-prohibit command for the console train signaler to the console upon receiving the switching success information returned by the all-electronic module, the light-prohibit command is used to instruct the console to end the display state of the console train signaler from a light-prohibit to a light-prohibit according to the light-prohibit command.

9. An electronic device, **characterized in that**, the electronic device comprising:
at least one processor; and
a memory communicatively connected with the at least one processor; wherein,
the memory stores computer program executable by the at least one processor, the computer program being executed by the at least one processor to enable the at least one processor to perform the display method of a console train signaler during a transition period of any one of claims 1-6.

10. A computer-readable storage medium, **characterized in that**, the computer-readable storage medium storing computer instructions for causing a processor to implement, when executed, a display method of a console train signaler during a transition period according to any one of claims 1-6.
